# EUROPÄISCHE PATENTSCHRIFT

(11) **EP 2 340 380 B1**
(45) Veröffentlichungstag und Bekanntmachung des Hinweises auf die Patenterteilung: **08.08.2012**
(21) Anmeldenummer: 09764704.4
(22) Anmeldetag: 23.10.2009
(51) Int. Cl.: F16H 63/48

(54) **BETÄTIGUNGSEINRICHTUNG FÜR PARKSPERRE**
CONTROL ELEMENT FOR A PARKING LOCK
DISPOSITIF D'ACTIONNEMENT POUR FREIN DE STATIONNEMENT

(30) Priorität: 29.10.2008 DE 102008043249
(43) Veröffentlichungstag der Anmeldung: 06.07.2011
(73) Patentinhaber: ZF Friedrichshafen AG, 88038 Friedrichshafen (DE)
(72) Erfinder: WEIFELS, Carsten, 49453 Barver (DE)
(86) Internationale Anmeldenummer: PCT/DE2009/050060
(87) Internationale Veröffentlichungsnummer: WO 2010/048947

(56) Entgegenhaltungen:
- DE-A1- 10 105 637
- DE-A1- 19 820 920
- DE-A1-102005 049 177
- DE-A1-102006 039 862

## Beschreibung

Die Erfindung betrifft eine Parksperren-Betätigungseinrichtung für ein Kraftfahrzeuggetriebe, insbesondere für einen Getriebeautomaten, gemäß dem Oberbegriff des Patentanspruchs 1.

Parksperren werden immer dann eingesetzt, wenn bei der Antriebskraftübertragung im Kraftfahrzeug nicht-mechanische Komponenten Verwendung finden, insbesondere bei automatischen Getrieben mit hydrodynamischem Drehmomentwandler. Kraftfahrzeuge mit Getriebeautomatik werden dabei üblicherweise mit einer Parksperre ausgerüstet, um ein unbeabsichtigtes Wegrollen des Fahrzeugs bei Fahrzeugstillstand und abgestelltem Motor zu unterbinden.

Hierzu blockiert die Parksperre - beispielsweise infolge einer durch den Fahrer eingeleiteten Betätigung - die drehstarr mit den Antriebsrädern verbundene Getriebeabtriebswelle, zumeist indem eine im Getriebeautomaten angeordnete Sperrklinke mit der Verzahnung eines auf der Getriebeabtriebswelle angeordneten Parksperrenrades in Eingriff gebracht wird.

Als Ubertragungseinrichtung zwischen einer derartigen, beispielsweise als Sperrklinke ausgebildeten Parksperre und der in der Fahrgastzelle des Kraftfahrzeuges angeordneten Betätigungsvorrichtung für das Fahrzeuggetriebe sind prinzipiell diverse mechanische, elektrohydraulische wie auch elektromechanische Systeme bekannt. Dabei umfassen mechanische Übertragungseinrichtungen zur Betätigung der Parksperre beispielsweise einen Bowdenzug zwischen dem in der Fahrgastzelle angeordneten Wählhebel und der am Getriebeautomaten angeordneten Getriebesteuerung.

Um die konstruktiven Gestaltungsmöglichkeiten bezüglich der freien Anordnung der Betätigungsvorrichtung in der Fahrgastzelle zu verbessern, und um zudem auch eine akustische Entkopplung der Betätigungsvorrichtung vom Antriebsstrang des Kraftfahrzeuges zu gewährleisten, wird bei modernen Kraftfahrzeugen bzw. Getriebeautomaten zunehmend zum shift-by-wire Prinzip übergegangen, zumal auch moderne Getriebeautomaten zunehmend vollelektronisch gesteuert werden.

Bei derartigen "shift-by-wire"-Getrieben erfolgt die Übertragung der Schaltbefehle von der Betätigungseinrichtung bzw. vom Wählhebel des Getriebeautomaten im Regelfall ausschließlich mittels elektrischer oder elektronischer Signale. Bezüglich der Parksperre bedeutet dies mit anderen Worten, dass auch die Betätigung der Parksperre im Regelfall auf elektrischem bzw. elektrohydraulischem Weg erfolgt. Unter Umständen kann die Betätigung der Parksperre auch automatisch erfolgen, beispielsweise im Fall von Auto-P, sprich im Fall des selbsttätigen Einlegens der Parksperre beim Abziehen des Zündschlüssels bzw. Verlassen des Kraftfahrzeugs.

Das Einlegen der Parksperre erfolgt auch bei shift-by-wire-betätigten Getrieben häufig mechanisch über einen Federspeicher, während das Ausrücken der Parksperre zumeist hydraulisch über den Öldruckkreislauf des Getriebeautomaten durchgeführt wird. Um somit bei einer etwa defekten Getriebeölversorgung das ungewollte Einlegen der Parksperre zu verhindern, solange am Wählhebel nicht die Betriebsstufe "P" eingelegt ist, muss für die Parksperre eine zusätzliche Verriegelungseinrichtung vorgesehen werden, die das Einlegen der Parksperre mittels der Kraft des Federspeichers im Getriebe zumindest solange unterbindet, bis der Wählhebel in die Betriebsstufe P oder Auto-P gebracht wurde.

Die Anforderungen an derartige Verriegelungseinrichtungen für Parksperren umfassen insbesondere eine möglichst geringe Auslösekraft bzw. Auslöseenergie bei gleichzeitig hohen Sperrkräften, sowie zusätzlich eine hohe Sicherheit gegen Fehlauslösungen beispielsweise durch Vibration, Verschmutzung oder Temperaturänderungen.

Im Stand der Technik ist eine Anzahl gattungsgemäßer Betätigungseinrichtungen für Parksperren mit Verriegelungsvorrichtung bekannt. Es wird insbesondere auf die DE 101 05 637 A1 hingewiesen, welche eine Betätigungseinrichtung mit den oberbegrifflichen Merkmalen des Patentanspruchs 1 offenbart. Aus den Druckschriften DE 10 2008 000 857, DE 10 2005 002 446 A1 und DE 10 2006 039 862 sind ferner jeweils Betätigungseinrichtungen für Parksperren mit Verriegelungsvonichtungen bekannt. Die dort offenbarten Betätigungseinrichtungen bzw. Verriegelungsvorrichtungen bedienen sich jeweils einer Kniehebelanordnung, welche zur Verriegelung der Parksperre in der ausgerückten Stellung in eine nahezu gestreckte Position gebracht wird. Aufgrund der Kinematik des Kniehebels lassen sich auf diese Weise zunächst einmal verhältnismäßig hohe Sperrkräfte mit vergleichsweise geringen Auslösekräften vereinen.

Eine Eigenschaft dieser aus dem Stand der Technik bekannten Verriegelungsvorrichtungen besteht darein, dass insbesondere die Kniehebeleinrichtungen bezüglich der Toleranzen exakt gefertigt werden müssen, um den gewünschten großen Quotienten zwischen Sperrkraft und Auslösekraft sicher zu realisieren. Unter Umständen reagieren die eingesetzten Kniehebelsperren zudem auf unterschiedliche Umgebungsbedingungen, und müssen insbesondere vor Verschmutzungen und starken Vibrationen geschützt werden.

Mit diesem Hintergrund ist es somit die Aufgabe der vorliegenden Erfindung, eine Parksperren-Betätigungseinrichtung mit einer Halteeinrichtung zur Sicherung der Parksperrenklinke in der ausgerückten Stellung zu schaffen, mit der die genannten Begrenzungen des Standes der Technik überwunden werden sollen. Die Erfindung soll dabei insbesondere eine Reduktion des mit der Betätigungseinrichtung bzw. der Halteeinrichtung verbundenen konstruktiven Aufwands und der daraus resultierenden Kosten ermöglichen. Ferner soll die Halteeinrichtung robust und vergleichsweise unempfindlich gegenüber Fertigungstoleranzen, hohen Beschleunigungskräften und Vibrationen sowie unterschiedlichen Temperatur- und Umgebungsbedingungen sein.

Diese Aufgabe wird durch eine Betätigungseinrichtung mit den Merkmalen von Patentanspruch 1 gelöst.

Bevorzugte Ausführungsformen sind Gegenstand der Unteransprüche.

In zunächst bekannter Weise umfasst die Parksperrenbetätigungseinrichtung gemäß der vorliegenden Erfindung eine im Wesentlichen translatorisch bewegliche Stelleinrichtung. Die Stelleinrichtung dient dabei in für sich genommen ebenso bekannter Weise der mechanischen Einrückung der Klinke einer Parksperre, und ist hierzu mit der Parksperrenklinke - bzw. mit deren getriebeinternem Betätigungsmechanismus - mechanisch gekoppelt, folgt also den Bewegungen der Parksperrenklinke bzw. den Bewegungen des getriebeinternen Betätigungsmechanismus der Parksperre. Ferner umfasst die Betätigungseinrichtung eine Halteeinrichtung zur Sicherung der Parksperrenklinke in der ausgerückten Stellung. Die Halteeinrichtung sorgt somit dafür, dass kein unbeabsichtigtes Einrasten der Parksperre erfolgt - beispielsweise infolge eines Druckabfalls im Hydrauliksystem des Getriebes - insbesondere solange am Wählhebel nicht die Stellung P eingelegt ist.

Erfindungsgemäß jedoch zeichnet sich die Betätigungseinrichtung dadurch aus, dass die Halteeinrichtung einen mit der Stelleinrichtung verbundenen Sperrschieber sowie einen Sperraktuator umfasst. Der Sperraktuator steuert dabei einen in seiner Breite veränderlichen Schieberspalt, wobei der Sperrschieber - je nach der durch den Sperraktuator eingestellten Spaltbreite - in den Schieberspalt einfahren kann, bzw. am Einfahren in den Schieberspalt gehindert ist.

Der Schieberspalt lässt sich somit vermittels des Sperraktuators zwischen einer ersten, weiten Spaltbreite und einer zweiten, engen Spaltbreite hin und zurück verstellen. Hierbei kann der Sperrschieber im Fall der ersten, weiten Spaltbreite in den Schieberspalt einfahren, wodurch die entriegehide Bewegung der mit dem Sperrschieber verbundenen Stelleinrichtung ermöglicht und somit die Parksperrenklinke zur Einrastung in das Parksperrenrad freigegeben wird. Im Fall der zweiten, engen Spaltbreite hingegen kann der Sperrschieber in den Schieberspalt nicht einfahren, wodurch die mit dem Sperrschieber verbundene Stelleinrichtung ebenfalls blockiert ist. In diesem Fall kann die Parksperrenklinke somit nicht in das Parksperrenrad einfahren.

Die erfindungsgemäße Ausführung der Halteeinrichtung zur Sicherung der Parksperrenklinke mit Schieberspalt und Sperrschieber löst die Aufgabe der Erfindung insofern, als zur Betätigung des breitenveränderlichen Schieberspalts lediglich eine sehr geringe Betätigungskraft bzw. Betätigungsenergie erforderlich ist. Gleichzeitig lassen sich hohe Haltekräfte erzeugen, da Haltekraft und Betätigungskraft nahezu senkrecht zueinander ausgerichtet sind und sich dadurch gegenseitig nahezu nicht beeinflussen können. Die bei schmalem bzw. geschlossenem Schieberspalt erforderlichen Kräfte, die dazu notwendig wären, den Sperrschieber in den Schieberspalt hineinzuzwängen (und damit die Parksperre zur Einrastung freizugeben), sind mit anderen Worten sehr viel größer als die zur Zuhaltung des Schieberspalts erforderlichen Betätigungskräfte.

Die erfindungsgemäße Parksperren-Betätigungseinrichtung ermöglicht damit eine sichere und zuverlässige Sperrung der Parksperrenklinke im ausgerückten Zustand bei gleichzeitig einfacher und robuster konstruktiver Ausführbarkeit. Sowohl Sperrschieber als auch breitenveränderlicher Schieberspalt lassen sich mit einer minimalen Zahl an Bauteilen sowie mit sehr geringer Masse ausführen. Hierdurch ergibt sich neben der Kosten- und Gewichtsersparnis eine besonders gute Toleranz gegenüber Schockbelastungen und Vibrationen sowie zusätzlich eine vergleichsweise kleine Toleranzkette, die ebenfalls zur Erhöhung der Zuverlässigkeit der Betätigungseinrichtung beiträgt. Gleichzeitig lassen sich hierdurch weitere Kosten bei Produktion, Montage und Wartung einsparen.

Die Erfindung wird zunächst einmal unabhängig davon verwirklicht, wie Sperrschieber bzw. Schieberspalt konstruktiv ausgebildet und angeordnet sind, solange die Sperrwirkung durch den breitenveränderlichen Schieberspalt gegeben ist. Der Schieberspalt ist jedoch durch den Spalt zwischen einem feststehenden Sockel einerseits, und einem vom Sperraktuator angetriebenen, beweglichen Anker andererseits gebildet, wodurch sich eine konstruktiv einfache Darstellung der erfindungsgemäßen Betätigungseinrichtung ergibt.

Die Übertragung der aktuatorischen Betätigungskräfte zwischen dem beweglichen Anker und dem feststehenden Sockel kann prinzipiell auf beliebige Weise erfolgen. Gemäß der Erfindung jedoch ist der Sperraktuator durch einen Elektromagneten gebildet, wobei der bewegliche Anker gleichzeitig aus einem ferromagnetischen Material besteht.

Dabei ist der feststehende Sockel durch den Körper des Elektromagneten selbst gebildet, und der bewegliche Anker durch eine schwenkbare Ankerplatte. Auf diese Weise ergibt sich eine konstruktive Realisierung des breitenveränderlichen Schieberspalts mit einer absolut minimalen Anzahl an Bauteilen, nämlich mit lediglich einem einzigen beweglichen Bauteil.

Ferner besitzt diese Ausführungsform den Vorteil einer kompakten und platzsparenden Konstruktion, und zudem lässt sich ein Elektromagnet weitestgehend beliebig positionieren. Dank der erfindungsgemäß eingesetzten Kombination aus Sperrschieber und Schieberspalt genügt dabei zudem ein kleiner und leichter Elektromagnet, der nur einen minimalen Strombedarf aufweist und damit auch Vorteile im Hinblick auf eine platzsparende Ausführung und einen geringen Energieverbrauch der Betätigungseinrichtung ermöglicht.

Gemäß einer bevorzugten Ausführungsform der Erfindung ist vorgesehen, dass entweder der Sperrschieber oder der bewegliche Anker, oder aber beide, stirnseitig in Richtung auf den Schieberspalt abgeschrägt sind. Durch diese Abschrägung wird insbesondere die Gefahr des Verkantens des Sperrschiebers beim Einfahren in den Schieberspalt verringert. Außerdem lässt sich hierdurch die Zuverlässigkeit der Parksperrenklinken-Halteeinrichtung erhöhen, da der Sperrschieber auf diese Weise auch dann in den Schieberspalt einfahren kann, falls der Schieberspalt - beispielsweise aufgrund einer nicht optimalen Schmierung oder aufgrund von Vibrationen - nicht seinen vollständigen Öffnungszustand erreicht.

Mit diesem Hintergrund sieht eine weitere Ausführungsform der Erfindung vor, dass der Sperrschieber in Richtung auf den Schieberspalt federbelastet ist. Auch durch diese Maßnahme wird die Zuverlässigkeit der Halteeinrichtung weiter erhöht, indem aufgrund der Federbelastung auch bei stromlosem Aktuatormagneten für eine definierte Position der schwenkbaren Ankerplatte gesorgt ist. Der Sperrschieber kann dabei aufgrund der Abschrägung von Sperrschieber oder/und Ankerplatte - trotz der Federbelastung der Ankerplatte - zuverlässig in den Schieberspalt einfahren, sobald der Aktuatormagnet stromlos geschaltet ist.

Die Erfindung lässt sich unabhängig davon verwirklichen, wie die Betätigungseinrichtung bzw. die im Wesentlichen translatorisch bewegliche Stelleinrichtung zur Betätigung der Parksperrenklinke konstruktiv ausgebildet und angeordnet ist. So kann es sich bei der Stelleinrichtung beispielsweise auch um einen rein translatorisch bewegten Betätigungsschieber handeln, der durch seine translatorische Bewegung die Parksperrenklinke entweder zur Einrückung in das Parksperrenrad freigibt, oder die Parksperrenklinke in der ausgerückten Stellung sperrt. Gemäß einer bevorzugten Ausführungsform der Erfindung umfasst die Stelleinrichtung jedoch einen Schwenkhebel, der insbesondere unmittelbar auf einer - die Parksperrenklinke betätigende - Getriebeschaltwelle angeordnet werden kann.

Mit dem die Stelleinrichtung bildenden Schwenkhebel (dessen schwenkbares Ende sich bei kleinen Winkelbewegungen im Wesentlichen translatorisch bewegt) ist sodann der erfindungsgemäße Sperrschieber verbunden. Je nach der Spaltbreite des Schieberspalts ist somit der Sperrschieber blockiert oder freigängig, und damit auch der mit dem Sperrschieber verbundene Schwenkhebel wie auch die Getriebeschaltwelle. Hierbei wird durch die Getriebeschaltwelle in für sich genommen bekannter Weise ein getriebeinternes Gestänge zum Ein- bzw. Ausrücken der Parksperrenklinke betätigt.

Auf diese Weise kann die erfindungsgemäße Betätigungseinrichtung wahlweise sowohl innerhalb des Getriebegehäuses als auch außerhalb des Getriebegehäuses angeordnet werden. Aufgrund dieser Flexibilität der Anordnung der Betätigungseinrichtung bzw. des Sperrschiebers ist somit ein konstruktiv einfacher und flexibel einsetzbarer Ersatz der aus dem Stand der Technik bekannten, aufwändigeren Lösungen durch die erfindungsgemäße Betätigungseinrichtung gegeben.

Es ist jedoch auch möglich, wie dies eine alternative Ausführungsform der Erfindung vorsieht, dass die Betätigungseinrichtung nicht unmittelbar im bzw. am Getriebe angeordnet, sondern über einen Seilzug oder über ein Koppelgestänge mit dem Getriebe verbunden ist. Auf diese Weise ergibt sich eine noch größere konstruktive Freiheit bezüglich der Auslegung und Anordnung der Betätigungseinrichtung und der Halteeinrichtung.

Häufig besteht bei einer Betätigungseinrichtung für die Parksperre eines shift-by-wire-gesteuerten Getriebes die zusätzliche Anforderung, die Parksperre auch beim Ausfall elektronischer Systeme oder beim Ausfall der elektrischen Spannungsversorgung des Kraftfahrzeugs - mittels einer Notentriegelung - noch ausrücken zu können, um das Fahrzeug auch in solchen Fällen noch bewegen zu können. Dies kommt beispielsweise in Betracht beim Werkstattaufenthalt des Fahrzeugs oder auch beim Abschleppen im Fall eines Defekts. Hierzu sind shift-by-wire-Betätigungseinrichtungen für Getriebeautomaten bekannt, bei denen eine für den Notbetrieb vorgesehene, zusätzliche mechanische Verbindung zwischen dem Wählhebel - bzw. zwischen einer eigenständigen Notentriegelungsbetätigung und dem Getriebe - vorhanden ist, beispielsweise ein Seilzug. Auf diese Weise kann die Parksperre auch beim vollständigen Ausfall der elektrischen und/oder hydraulischen Systeme - nach entsprechender Betätigung der Notentriegelung - mechanisch über den Seilzug geöffnet (und ggf. auch wieder geschlossen) werden, so dass das Fahrzeug in jedem Fall bewegt werden kann.

Mit diesem Hintergrund sieht eine weitere bevorzugte Ausführungsform der Erfindung vor, dass die Betätigungseinrichtung eine an der Stelleinrichtung angreifende Einrichtung zur mechanischen Notentriegelung der Parksperre umfasst, die vorzugsweise mittels eines Seilzugs mit einem Notbetätigungselement im Griffbereich des Fahrers verbunden ist. Der Angriff der Notentriegelungseinrichtung unmittelbar an der Stelleinrichtung ist vorteilhaft insofern, als auf diese Weise gleichzeitig (beispielsweise über die Getriebeschaltwelle) sowohl die Parksperre ausgerückt als auch der Sperrschieber außer Eingriff mit dem Schieberspalt gebracht wird.

Vorzugsweise ist dabei die Notentriegelungsbetätigung mittels eines Seilzugs mit einem entsprechenden Notentriegelungs-Betätigungselement im Griffbereich des Fahrers verbunden. Die Betätigung mittels Seilzug ist vorteilhaft, da sich das Notentriegelungs-Betätigungselement auf diese Weise flexibel platzieren lässt. Ferner lässt sich durch eine Seilzugübertragung - insbesondere im Vergleich zu einem Gestänge oder einer vergleichsweise starren Schubdrahtbetätigung - die unerwünschte Körperschallübertragung vom Getriebe in den Fahrzeuginnenraum reduzieren.

Eine weitere bevorzugte Ausführungsform der Erfindung sieht vor, dass die Notentriegelungsbetätigung mittels eines entgegen der Betätigungsrichtung offenen Endanschlags an der Stelleinrichtung angreift. Hierdurch wird vermieden, dass die Notentriegelungsbetätigung und/oder der Seilzug bei den normalen Betriebsbewegungen der Getriebe-Betätigungseinrichtung, bzw. bei entsprechenden Betriebsbewegungen der Stelleinrichtung mitbewegt wird. Auf diese Weise lässt sich der Verschleiß reduzieren, es ergibt sich eine geringere Geräuschentwicklung, ein geringerer Wartungsbedarf sowie ein reduzierter Kraft- und Energiebedarf für die Betätigungseinrichtung.

Gemäß einer weiteren, bevorzugten Ausführungsform der Erfindung ist die die Parksperrenklinke betätigende Stelleinrichtung mit einem hydraulischen Aktorelement verbunden, wobei das hydraulische Aktorelement vorzugsweise mittels eines Federspeichers in Richtung auf die eingerückte Stellung der Parksperrenklinke hin federbeaufschlagt ist. Dabei ist das hydraulische Aktorelement so eingerichtet, dass - bei Beaufschlagung durch Getriebe-Hydrauliköldruck - das Ausrücken der Parksperrenklinke aus dem Eingriff mit dem Parksperrenrad erfolgt. Diese Ausführungsformen sind - in Verbindung mit dem erfindungsgemäßen Sperrschieber - vorteilhaft insofern, als auf diese Weise ein aktives Ausrücken der Parksperrenklinke bei anliegendem Hydrauliköldruck problemlos mittels Hilfsenergie erfolgen kann. Das Einfahren der Parksperre hingegen kann aufgrund der Federbeaufschlagung des hydraulischen Aktorelements sicherheitshalber auch ohne Hydrauliköldruck erfolgen.

Die Parksperrenklinke kann damit auch bei einem etwaigen Ausfall des hydraulischen Systems noch ohne weiteres durch den Federspeicher eingerückt werden, wobei auch in diesem Fall ein ungewolltes selbsttätiges Einrücken der Parksperre aufgrund des erfindungsgemäßen Sperrschiebers solange unterbunden bleibt, bis der Sperraktuator den Schieberspalt freigibt.

Im Folgenden wird die Erfindung anhand lediglich Ausführungsbeispiele darstellender Zeichnungen näher erläutert. Es zeigt:
- **Fig. 1**: in isometrischer Darstellung eine mögliche Anordnung einer Ausführungsform der erfindungsgemäßen Betätigungseinrichtung an einem Automatikgetriebe;
- **Fig. 2**: die Betätigungseinrichtung gemäß **Fig. 1** in Draufsicht mit entfernten Gehäusedeckel, bei eingelegter Parksperre;
- **Fig. 3**: in einer **Fig. 2** entsprechenden Darstellung und Ansicht die Betätigungseinrichtung gemäß **Fig. 1** und **2**, mit ausgelegter und verriegelter Parksperre; und
- **Fig. 4**: in einer **Fig. 2** und **3** entsprechenden Darstellung und Ansicht die Betätigungseinrichtung gemäß **Fig. 1** bis **3**, mit manuell ausgelegter Parksperre.

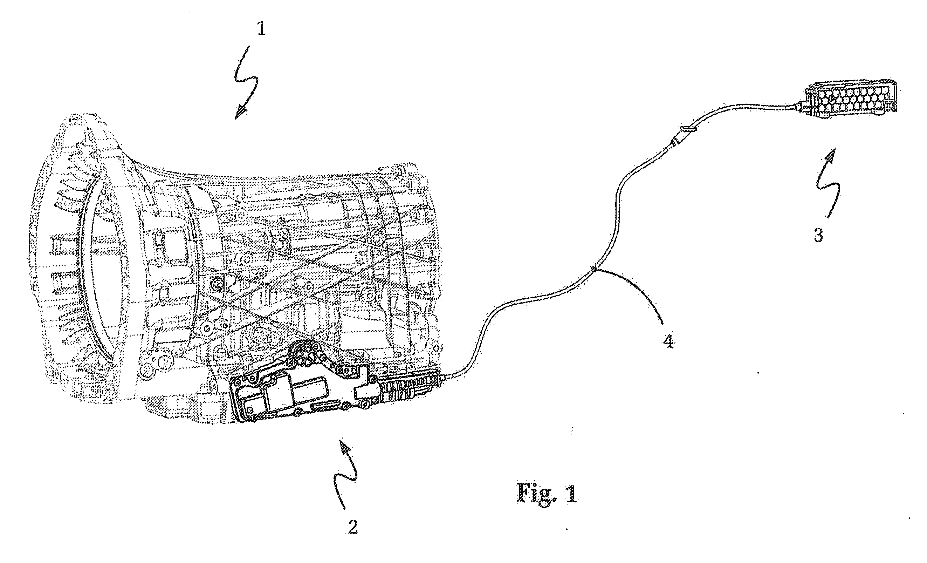

In **Fig. 1** erkennt man zunächst einmal (punktiert dargestellt) ein Automatikgetriebe 1 für ein Kraftfahrzeug. An dem Automatikgetriebe 1 ist eine Ausführungsform einer erfindungsgemäßen Betätigungseinrichtung 2 angeordnet, die zudem eine Einrichtung zur mechanischen Notentriegelung aufweist. Dabei ist die Notentriegelungsbetätigung 3 mittels Seilzug 4 an die Betätigungseinrichtung 2 angebunden.

Aus **Fig. 1** geht insbesondere die mit der Erfindung ermöglichte kompakte Gestaltung der Betätigungseinrichtung 2 als in sich abgeschlossene Baugruppe hervor, die somit einfach und platzsparend unmittelbar an ein Getriebe 1 angeflanscht werden kann. Dies gilt insbesondere auch für bereits existierende Ausführungen von Automatikgetrieben, die somit mit nur minimalen Änderungen an die erfindungsgemäße Betätigungseinrichtung 2 adaptiert werden können.

Ferner erkennt man in **Fig. 1** den flexibel ausführbaren Bowdenzug 4 für die Notentriegelungsbetätigung 3, der somit insbesondere eine variable Platzierung der Notentriegelungsbetätigung 3 erlaubt, und der überdies die Körperschallübertragung vom Getriebe 2 auf die Notentriegelungsbetätigung 3 und damit in den Fahrzeuginnenraum minimiert.

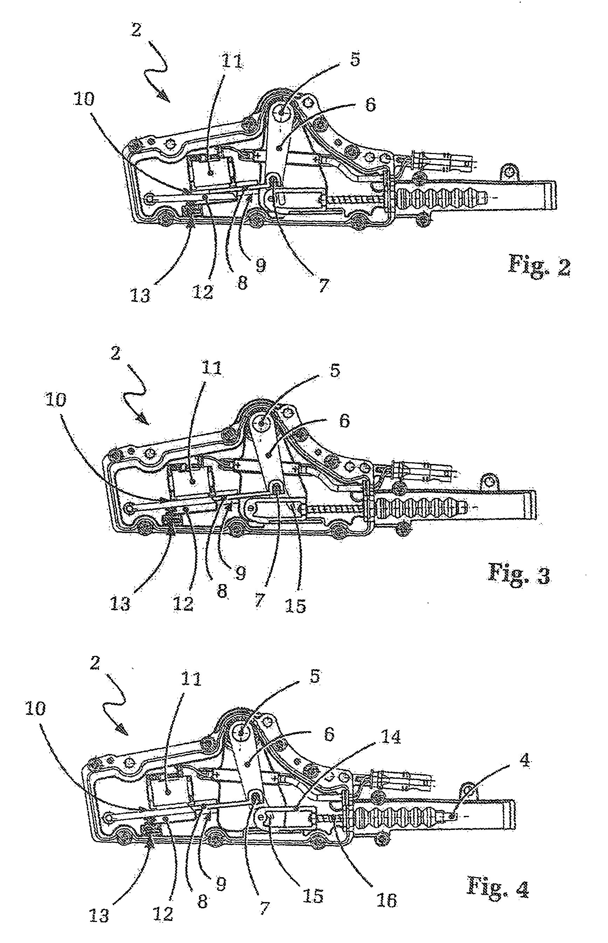

Die **Fig. 2** bis **4** zeigen die Betätigungseinrichtung 2 gemäß **Fig. 1** jeweils in verschiedenen Schaltpositionen. Zur Erkennbarkeit der Funktionsweise der Betätigungseinrichtung 2 ist in den Darstellungen der **Fig. 2** bis **4** der Gehäusedeckel der Betätigungseinrichtung 2 gemäß **Fig. 1** entfernt.

Im Zustand gemäß **Fig. 2** ist dabei (im Rahmen des Normalbetriebs des Automatikgetriebes) die Parksperre eingelegt, in **Fig. 3** ist die Parksperre ausgelegt und im ausgelegten Zustand verriegelt, und in **Fig. 4** wurde die Notentriegelungsbetätigung 3 aktiviert, und die Parksperre manuell ausgelegt.

In den **Fig. 2** bis **4** erkennt man zunächst einmal einen mit der Getriebeschaltwelle 5 verbundenen Schwenkhebel 6, der bei dieser Ausführungsform die Stelleinrichtung bildet, welche - über die Getriebeschaltwelle 5 - mechanisch mit der Parksperrenklinke bzw. mit dem getriebeinternen Mechanismus zur Betätigung der Parksperrenklinke (nicht dargestellt) verbunden ist. Mittels des Schwenkhebels 6 lässt sich somit einerseits die Parksperre mechanisch betätigen, insbesondere ausrücken, und andererseits folgt der Schwenkhebel 6 den normalen (getriebeaktuatorischen) Betätigungen der Parksperre sowohl beim Einrücken als auch beim Ausrücken der Parksperre.

Unmittelbar am Schwenkhebel 6 greift mittels eines Bolzens 7 der erfindungsgemäße Sperrschieber 8 an. Der Sperrschieber 8 ist mittels einer Gleitführung 9 im Gehäuse der Betätigungseinrichtung 2 gelagert und lässt sich zwischen einer ersten Stellung (vgl. **Fig. 2**) und einer zweiten Stellung (vgl. **Fig. 3** und 4) zeichnungsbezogen in der Horizontalen hin und her bewegen.

Dabei greift in der Darstellung von **Fig. 2** der sich in seiner ersten Stellung befindliche Sperrschieber 8 in einen aktuatorisch breitenveränderlichen Schieberspalt 10 ein. Der Schieberspalt 10 wird durch das Zusammenwirken eines Elektromagneten 11 und einer schwenkbeweglichen Ankerplatte 12 gebildet. Ist somit der Elektromagnet 11 stromlos geschaltet, so kann der Sperrschieber 8 in den Spalt sehen zwischen Elektromagnet 11 und Ankerplatte 12 einfahren, was durch in den Figuren erkennbare Abschrägungen der einander zugewandten Enden sowohl des Sperrschiebers 8 als auch der Ankerplatte 12 noch erleichtert wird. Um der schwenkbeweglichen Ankerplatte 12 eine definierte Position zu geben und unerwünschte Klappergeräusche zu vermeiden, ist die Ankerplatte 12 mittels einer vergleichsweise schwachen Druckfeder 13 gegen den Elektromagneten vorgespannt.

Die Darstellung der **Fig. 2** entspricht somit der (im Normalbetrieb des Automatikgetriebes) eingelegten Parksperre. Die Parksperre wurde dabei in der Weise eingelegt, dass der (nicht dargestellte) getriebeinterne, aktuatorische Mechanismus zur Betätigung der Parksperrenklinke, welcher zumeist vom Hydraulikölkreislauf des Getriebes gespeist wird, deaktiviert und der Elektromagnet 11 gleichzeitig stromlos geschaltet wurde. Hierdurch wurde der Schwenkhebel 6 und damit die Parksperrenklinke freigegeben, und die Parksperrenklinke konnte federbelastet in das Parksperrenrad einfahren.

Der Darstellung von **Fig. 3** hingegen entspricht die (im Normalbetrieb des Automatikgetriebes) ausgelegte Parksperre. Auch hier erfolgte die Auslegung der Parksperre wieder mittels der getriebeinternen, hydraulischen Aktuatorik, wobei jedoch gleichzeitig der Elektromagnet 11 eingeschaltet wurde. Beim Auslegen der Parksperre wurde somit der Schwenkhebel 6 gegen den Uhrzeigersinn aus der Position gemäß **Fig. 2** in die Position gemäß **Fig. 3** bewegt, wodurch auch der mit dem Schwenkhebel 6 gekoppelte Sperrschieber 8 aus dem Schieberspalt 10 herausgezogen wurde, und sich in **Fig. 3** somit in seiner zweiten Stellung befindet. Aufgrund der Federwirkung der Druckfeder 13, sowie aufgrund der Anziehungskraft des Elektromagneten 11 wurde dabei der Schieberspalt 10 geschlossen. Der Sperrschieber 8 kann nunmehr so lange nicht mehr in den Schieberspalt eindringen, wie der Stromfluss durch den Elektromagneten 11 anhält.

Dies dient als Sicherung gegen ein unerwünschtes selbsttätiges Einlegen der Parksperre, insbesondere für den Fall, dass der Hydrauliköldruck im Getriebe abfallen sollte, wodurch ansonsten die (federbelastete) Parksperrenklinke freigegeben würde, und unkontrolliert in das Parksperrenrad einfahren könnte. Dank des durch den Elektromagneten 11 verschlossen gehaltenen Schieberspalts 10 und des mit dem Schwenkhebel 6 und damit mit der Getriebeschaltwelle 5 verbundenen Sperrschiebers 8 wird das Einlegen der Parksperre jedoch auch beim Ausfall der hydraulischen Systeme des Getriebes so lange verhindert, bis die Getriebesteuerung den Stromfluss durch den Elektromagneten 11 abschaltet.

**Fig. 3** schließlich zeigt, auf welche Weise dank der erfindungsgemäßen Betätigungseinrichtung - die bei der Ausführungsform gemäß **Fig. 1** bis **4** eine Notentriegelungsbetätigung 3, 4 umfasst, vgl. **Fig. 1** - die Parksperre auch beim Ausfall sämtlicher hydraulischer und/oder elektrischer Systeme des Kraftfahrzeugs noch mechanisch ausgelegt werden kann, beispielsweise um das Kraftfahrzeug in einem solchen Fall noch abschleppen oder schieben zu können.

Hierzu wird die im Fahrzeuginnenraum angeordnete Notentriegelung 3 betätigt (siehe **Fig. 1**), wodurch mittels des Bowdenzugs 4 ein im Gehäuse der Betätigungseinrichtung 2 angeordneter und mit dem Bowdenzug 4 verbundener Betätigungsschieber 14 zeichnungsbezogen nach rechts in Bewegung gesetzt wird. Der Betätigungsschieber 14 greift an einer Nase 15 des mit der Getriebeschaltwelle 5 verbundenen Schwenkhebels 6 an, und schwenkt somit den Hebel 6 gegen den Uhrzeigersinn. Hierdurch wird der Sperrschieber 8 aus dem Schieberspalt 10 herausgezogen und gleichzeitig - über die Getriebeschaltwelle 5 - die Parksperrenklinke mechanisch außer Eingriff mit dem Parksperrenrad gebracht. Die Nase 15 bildet dabei einen entgegen der Betätigungsrichtung offenen Anschlag für den Betätigungsschieber 14, so dass letzterer nicht mitbewegt wird, wenn sich (im Normalbetrieb des Automatikgetriebes bzw. der Betätigungseinrichtung) der Schwenkhebel 6 beim getriebeaktuatorischen Ein- oder Auslegen der Parksperre hin und her bewegt.

Die Parksperre bleibt dabei solange ausgelegt, wie die Notentriegelung 3 sich in der Betätigungsstellung gemäß **Fig. 4** befindet. Wird die Notentriegelung 3 wieder deaktiviert und der Bowdenzug 4 damit wieder entspannt, so bewegt sich der Betätigungsschieber 14 infolge einer am Ende des Bowdenzugs angeordneten Druckfeder 16 zeichnungsbezogen wieder in seine Grundstellung an den linken Anschlag. Hierdurch werden auch Schwenkhebel 6 und Getriebeschaltwelle 5 wieder freigegeben, und die Parksperrenklinke kann aufgrund ihrer Federbelastung wieder in das Parksperrenrad einfahren.

Da der Elektromagnet 11 unbestromt ist, kann der Sperrschieber 8 dabei gleichzeitig in den Schieberspalt 10 einfahren, wobei der Sperrschieber 8 - infolge der Abschrägungen der einander zugewandten Enden von Sperrschieber 8 und Ankerplatte 12 - die Ankerplatte 12 im Uhrzeigersinn, zeichnungsbezogen nach unten, verschwenkt. Es ergibt sich dadurch wieder der Zustand gemäß **Fig. 2**.

Im Ergebnis wird somit deutlich, dass dank der Erfindung eine Betätigungseinrichtung für eine Parksperre geschaffen wird, mit der insbesondere Reduktionen des konstruktiven Aufwands und der damit verbundenen Kosten erreichbar sind. Gleichzeitig ist die erfindungsgemäße Betätigungseinrichtung robust und im Vergleich zu Stand der Technik unempfindlich gegenüber Fertigungstoleranzen, Beschleunigungskräften, Vibrationen und Temperaturbelastungen. Die Betätigungseinrichtung erreicht dabei mit nur geringer Hilfsenergie zuverlässig hohe Haltekräfte zur Sicherung der Parksperrenklinke.

Die Erfindung leistet damit einen maßgeblichen Beitrag zur Verbesserung der Betriebssicherheit, Kosteneffektivität, Lebensdauer und Montagefreundlichkeit bei gleichzeitiger Verringerung des Bauraumbedarfs für Parksperren an Automatikgetrieben.

### Bezugszeichenliste

- 1: Automatikgetriebe
- 2: Betätigungseinrichtung
- 3: Notentriegelungsbetätigung
- 4: Seilzug, Bowdenzug
- 5: Getriebeschaltwelle
- 6: Stelleinrichtung, Schwenkhebel
- 7: Bolzen
- 8: Sperrschieber
- 9: Gleitführung
- 10: Schieberspalt
- 11: Elektromagnet, Magnetaktuator, Sockel
- 12: Ankerplatte
- 13: Druckfeder
- 14: Betätigungsschieber
- 15: Nase
- 16: Druckfeder

## Patentansprüche

1. Parksperren-Betätigungseinrichtung (2) für Kraftfahrzeuggetriebe (1), insbesondere für Getriebeautomaten, die Betätigungseinrichtung (2) umfassend eine mit einer Parksperrenklinke mechanisch gekoppelte, im Wesentlichen translatorisch bewegliche Stelleinrichtung (6), sowie eine auf die Stelleinrichtung (6) wirkende Halteeinrichtung (8, 10, 11, 12) zur Sicherung der Parksperrenklinke in der ausgerückten Stellung, wobei die Halteeinrichtung (8, 10, 11, 12) einen mit der Stelleinrichtung (6) verbundenen Sperrschieber (8) sowie einen Sperraktuator (11) mit einem aktuatorisch breitenveränderlichen Schieberspalt (10) umfasst, wobei der Schieberspalt (10) mittels des Sperraktuators (11) zwischen einer ersten, weiten Spaltbreite, in welcher der Sperrschieber (8) - unter Freigabe der Stelleinrichtung (6) - in den Schieberspalt (10) einfahrbar ist, und einer zweiten, engen Spaltbreite, in welcher der Sperrschieber (8) - unter Blockierung der Stelleinrichtung (6) - nicht in den Schieberspalt (10) einfahrbar ist, verstellbar ist, wobei der Schieberspalt durch den Spalt (10) zwischen einem feststehenden Sockel (11) und einem vom Sperraktuator angetriebenen beweglichen Anker (12) gebildet ist, und wobei der Sperraktuator ein Elektromagnet (11) ist, **dadurch gekennzeichnet, dass** der Anker (12) aus ferromagnetischem Material besteht, dass der feststehende Sockel durch den Körper des Elektromagneten (11) gebildet ist, und dass der bewegliche Anker durch eine schwenkbare Ankerplatte (12) gebildet ist.

2. Betätigungseinrichtung (2) nach Anspruch 1, **dadurch gekennzeichnet, dass** Sperrschieber (8) oder/und Anker (12) stirnseitig in Richtung auf den Schieberspalt (10) abgeschrägt sind.

3. Betätigungseinrichtung (2) nach Anspruch 1 oder 2, **dadurch gekennzeichnet, dass** die Ankerplatte (12) in Richtung auf den Schieberspalt (10) federbelastet ist.

4. Betätigungseinrichtung (2) nach einem der Ansprüche 1 bis 3, **dadurch gekennzeichnet, dass** die Stelleinrichtung (6) einen Schwenkhebel (6) umfasst, wobei der Schwenkhebel (6) unmittelbar mit einer Getriebeschaltwelle (5) verbindbar ist.

5. Betätigungseinrichtung (2) nach einem der Ansprüche 1 bis 4, **dadurch gekennzeichnet, dass** die Halteeinrichtung (8, 10, 11, 12) der Betätigungseinrichtung (2) über einen Seilzug oder ein Koppelgestänge an die Stelleinrichtung (6) der Parksperrenklinke angebunden ist.

6. Betätigungseinrichtung (2) nach einem der Ansprüche 1 bis 5, **dadurch gekennzeichnet, dass** die Betätigungseinrichtung (2) eine an der Stelleinrichtung (6) angreifende mechanische Notentriegelungsbetätigung (3, 4, 14) umfasst.

7. Betätigungseinrichtung (2) nach Anspruch 6, **dadurch gekennzeichnet, dass** die Notentriegelungsbetätigung (3, 4, 14) mittels Seilzug (4) mit einem Betätigungselement (3) im Griffbereich des Fahrers verbunden ist.

8. Betätigungseinrichtung (2) nach Anspruch 6 oder 7, **dadurch gekennzeichnet, dass** die Notentriegelungsbetätigung (3, 4, 15) mittels eines entgegen der Betätigungsrichtung offenen Endanschlags (15) an der Stelleinrichtung (6) angreift.

9. Betätigungseinrichtung (2) nach einem der Ansprüche 1 bis 8, **dadurch gekennzeichnet, dass** die Stelleinrichtung (6) mit einem hydraulischen Aktorelement verbunden ist, wobei das hydraulische Aktorelement zum Ausrücken der Parksperrenklinke bei Beaufschlagung durch Öldruck eingerichtet ist.

10. Betätigungseinrichtung (2) nach Anspruch 9, **dadurch gekennzeichnet, dass** das hydraulische Aktorelement mittels eines Federspeichers in Richtung auf die eingerückte Parksperrenklinke federbeaufschlagt ist.

## Claims

1. Parking lock control element (2) for motor vehicle transmissions (1), in particular for automatic transmissions, the control element (2) comprising an essentially translationally movable actuating device (6) coupled mechanically to a parking lock pawl, and a holding device (8, 10, 11, 12), acting on the actuating device (6), for securing the parking lock pawl in the disengaged position, the holding device (8, 10, 11, 12) comprising a blocking slide (8) connected to the actuating device (6) and a blocking actuator (11) having a slide gap (10) variable in width by actuation, the slide gap (10) being adjustable by means of the blocking actuator (11) between a first, wide gap width, in which the blocking slide (8) can be moved into the slide gap (10), thereby releasing the actuating device (6), and a second, narrow gap width, in which the blocking slide (8) cannot be moved into the slide gap (10), thereby blocking the actuating device (6), the slide gap being formed by the gap (10) between a fixed base (11) and a moveable armature (12) driven by the blocking actuator, and the blocking actuator being an electromagnet (11), **characterized in that** the armature (12) consists of ferromagnetic material, **in that** the fixed base is formed by the body of the electromagnet (11), and **in that** the moveable armature is formed by a pivotable armature plate (12).

2. Control element (2) according to Claim 1, **characterized in that** the blocking slide (8) and/or the armature (12) are / is bevelled on the end face in the direction of the slide gap (10).

3. Control element (2) according to Claim 1 or 2, **characterized in that** the armature plate (12) is spring-loaded in the direction of the slide gap (10).

4. Control element (2) according to one of Claims 1 to 3, **characterized in that** the actuating device (6) comprises a pivoting lever (6), the pivoting lever (6) being connectable directly to a transmission gear-shift shaft (5).

5. Control element (2) according to one of Claims 1 to 4, **characterized in that** the holding device (8, 10, 11, 12) of the control element (2) is tied to the actuating device (6) of the parking lock pawl via a cable assembly or a coupling linkage.

6. Control element (2) according to one of Claims 1 to 5, **characterized in that** the control element (2) comprises a mechanical emergency unlocking actuation means (3, 4, 14) engaging on the actuating device (6).

7. Control element (2) according to Claim 6, **characterized in that** the emergency unlocking actuation means (3, 4, 14) is connected by means of a cable assembly (4) to an operating element (3) in the driver's gripping region.

8. Control element (2) according to Claim 6 or 7, **characterized in that** the emergency unlocking actuation means (3, 4, 15) engages on the actuating device (6) by means of a limit stop (15) open opposite to the actuation direction.

9. Control element (2) according to one of Claims 1 to 8, **characterized in that** the actuating device (6) is connected to a hydraulic actuator element, the hydraulic actuator element being designed to disengage the parking lock pawl when acted upon by oil pressure.

10. Control element (2) according to Claim 9, **characterized in that** the hydraulic actuator element is spring-loaded in the direction of the engaged parking lock pawl by means of a spring accumulator.

## Revendications

1. Dispositif d'actionnement (2) pour un mécanisme de verrouillage de stationnement pour une transmission de véhicule automobile (1), en particulier pour une transmission automatique, le dispositif d'actionnement (2) comprenant un dispositif de commande (6) déplaçable essentiellement en translation, accouplé mécaniquement à un cliquet de verrouillage de stationnement, ainsi qu'un dispositif de retenue (8, 10, 11, 12) agissant sur le dispositif de commande (6) pour fixer le cliquet de verrouillage de stationnement dans la position débrayée, le dispositif de retenue (8, 10, 11, 12) comprenant un coulisseau de verrouillage (8) connecté au dispositif de commande (6) ainsi qu'un actionneur de verrouillage (11) avec un interstice de coulisseau (10) dont la largeur peut être modifiée par l'actionneur, l'interstice de coulisseau (10) pouvant être réglé au moyen de l'actionneur de verrouillage (11) entre une première largeur d'interstice large, dans laquelle le coulisseau de verrouillage (8) - en libérant le dispositif de commande (6) - peut être enfoncé dans l'interstice de coulisseau (10), et une deuxième largeur d'interstice étroite, dans laquelle le coulisseau de verrouillage (8) - en bloquant le dispositif de commande (6) - ne peut pas être enfoncé dans l'interstice de coulisseau (10), l'interstice de coulisseau étant formé par la fente (10) entre un socle fixe (11) et une armature (12) mobile entraînée par l'actionneur de verrouillage et l'actionneur de verrouillage étant un électroaimant (11), **caractérisé en ce que** l'armature (12) se compose de matériau ferromagnétique, **en ce que** le socle fixe est formé par le corps de l'électroaimant (11) et **en ce que** l'armature mobile est formée par une plaque d'armature pivotante (12).

2. Dispositif d'actionnement (2) selon la revendication 1, **caractérisé en ce que** le coulisseau de verrouillage (8) et/ou l'armature (12) sont biseautés du côté frontal dans la direction de l'interstice de coulisseau (10).

3. Dispositif d'actionnement (2) selon la revendication 1 ou 2, **caractérisé en ce que** la plaque d'armature (12) est sollicitée par ressort dans la direction de l'interstice de coulisseau (10).

4. Dispositif d'actionnement (2) selon l'une quelconque des revendications 1 à 3, **caractérisé en ce que** le dispositif de commande (6) comprend un levier pivotant (6), le levier pivotant (6) pouvant être connecté directement à un arbre de changement de vitesse (5).

5. Dispositif d'actionnement (2) selon l'une quelconque des revendications 1 à 4, **caractérisé en ce que** le dispositif de retenue (8, 10, 11, 12) du dispositif d'actionnement (2) est relié par le biais d'un câble Bowden ou d'une tringlerie d'accouplement au dispositif de commande (6) du cliquet de verrouillage de stationnement.

6. Dispositif d'actionnement (2) selon l'une quelconque des revendications 1 à 5, **caractérisé en ce que** le dispositif d'actionnement (2) comprend un actionnement de déverrouillage de secours (3, 4, 14) mécanique intervenant sur le dispositif de commande (6).

7. Dispositif d'actionnement (2) selon la revendication 6, **caractérisé en ce que** l'actionnement de déverrouillage de secours (3, 4, 14) est connecté au moyen d'un câble Bowden (4) à un élément d'actionnement (3) dans la région d'intervention du conducteur.

8. Dispositif d'actionnement (2) selon les revendications 6 ou 7, **caractérisé en ce que** l'actionnement de déverrouillage de secours (3, 4, 14) intervient, au moyen d'une butée de fin de course (15) ouverte à l'opposé de la direction d'actionnement, sur le dispositif de commande (6).

9. Dispositif d'actionnement (2) selon l'une quelconque des revendications 1 à 8, **caractérisé en ce que** le dispositif de commande (6) est connecté à un élément d'actionneur hydraulique, l'élément d'actionneur hydraulique étant prévu pour débrayer le cliquet de verrouillage de stationnement lors d'une sollicitation avec une pression d'huile.

10. Dispositif d'actionnement (2) selon la revendication 9, **caractérisé en ce que** l'élément d'actionneur hydraulique est sollicité par ressort au moyen d'un accumulateur à ressort dans la direction du cliquet de verrouillage de stationnement embrayé.
